Europäisches Patentamt

(19) European Patent Office

Office européen des brevets

(11) Publication number: **0 315 607**
A1

(12) **EUROPEAN PATENT APPLICATION**

(21) Application number: **88830472.2**

(22) Date of filing: **03.11.88**

(51) Int. Cl.⁴: **B 62 D 33/02**
E 05 D 5/04

(30) Priority: **04.11.87 IT 3609387**

(43) Date of publication of application:
**10.05.89 Bulletin 89/19**

(84) Designated Contracting States:
**BE DE ES FR GB GR LU NL SE**

(71) Applicant: **OFFICINE ROMANAZZI S.p.A.**
**Via Tiburtina 1072**
**I-00156 Rome  (IT)**

(72) Inventor: **Peruzzi, Luigi**
**c/o Officine Romanazzi S.p.A. Via Tiburtina 1072**
**I-00156 Rome  (IT)**

(74) Representative: **de Simone, Domenico et al**
**Ing. Barzanò & Zanardo Roma S.p.A. Via Piemonte 26**
**I-00187 Roma  (IT)**

(54) Connection hinge of the side boards to the body of T.I.R. vehicles.

(57) A connector hinge of the side boards to the body of T.I.R. vehicles, said hinge comprising a male member (1) consisting of a plate (8) that couples with a slit (11) obtained in the side surface of the body (3), and of a pin (4) which is parallel to said plate (8) and is coupled to the same through a connection member; and a female member (6) which is provided at the lower part with a hole for realizing a rotatable coupling with said pin (4) of said male member (1), and which is provided at the upper part with means for realizing a fixed coupling with the lower part of the side board (7) of the body; the coupling between said slot (11) and said male member (1) being so realized as to make it impossible the removal of the same if said female member (6) is coupled to said male member (1).

fig. 1

Bundesdruckerei Berlin

EP 0 315 607 A1

## Description

## CONNECTOR HINGE OF THE SIDE BOARDS TO THE BODY OF T.I.R. VEHICLES

The object of the present invention consists in a connector hinge of the side boards to the body of T.I.R. vehicles, and, more particularly, a hinge that gives no possibility of tampering with a sealed load without leaving any traces of lock-picking.

The Official Gazette of the European Community of 31st December 1976 published the "(EEC) Regulation No. 3237/76 of the Council of the 21st December, 1976, concerning the advanced application of the technical enclosures and the advanced employment of the T.I.R. carnet model of the customs convention relating to the international freight of goods accompanied by a T.I.R. carnet (the T.I.R. convention), stipulated at Geneva on 14th November, 1975".

More particularly, article No. 1 of said Regulations provides that for international freight of goods under customs seal, vehicles can only approved whose compartment intended for goods is so realized as to make it impossible to remove or to add goods through the sealed part without leaving any trace of lock-picking.

The article No. 2 of the same Regulations further states that in order to obtain such end, the structural members of the compartment intended for the load are to be assembled employing devices that cannot be removed and then reassembled acting from the outside.

The customs sealing is performed by applying a string at a point corresponding to the side boards, along their outside perimeter.

At the present time, the body is hinged to the side boards by means of hinges having a female member welded to the body and then the male member on the side boards.

Such type of solution, in addition to have all well known drawbacks due to the need for welding operations, can not warrant in an absolutely sure way the respect of the EEC regulations as regards the impossibility of tampering with a load sealed by the Customs.

Accordingly, the main object of the present invention is that of realizing a connector hinge between the body and the side boards of the body itself, which connector hinge does not allow absolutely the load to be tampered with, once the load is sealed, without leaving clear traces of lock-picking, so that such hinge satisfies completely the requirements of the EEC Regulations.

It is a further object of the Applicant that of providing a hinge of the type mentioned above, whose member connected to the body is not connected to the same through welding, but through a mechanical type coupling, so as to avoid all drawbacks of welding operations.

Moreover, the present invention suggests a hinge that can be replaced by means of very simple operations, unlike the hinge types that are commonly adopted at the present time.

These and other objects are obtained by the Applicant through the proposal of a hinge whose male member is coupled to a suitable slot in the body, said male member being fastened by means of screws, while the female member is borne by the side board itself, and the connection between the male member and the slot is so realized as to make it impossible to exert an action on the screws when said side board is closed, and so as to make it impossible to disconnect the male member from the slot.

Accordingly it is a specific object of the present invention the realization of a connector hinge of the side boards to the body of T.I.R. vehicles, said connector hinge comprising a male member consisting of a plate that is coupled to a slot realized in the lateral surface of the body, and of a pin which is parallel to said plate and is connected to the same through a connection member; and a female member provided at the lower portion with a hole for realizing a rotatable coupling with said pin of said male member, and, at the upper portion, provided with means for realizing a fixed coupling with the lower portion of the side board of the body; the coupling between said slot and said male member being realized so that it cannot be removed when the female member is connected to the male member.

Preferably, the fastening of the male member to the lateral surface of the body is obtained by means of bolts passing through corresponding holes provided in said lateral surface and in the plate of said male member, the pin of the latter being arranged so that it does not interfere with said bolts.

The coupling between the female member and the side board is obtained through two holes provided in the upper surface of said female member into which the corresponding locking members are inserted.

A safety member, of the type of a split pin, capable of avoiding an accidental disconnection, can be placed on said pin of the male member after its insertion into the hole of the female member, at the end portion of the male member protruding out of the female member.

The present invention will be disclosed in the following just for illustrative and not for limitative purposes, with particular reference to the figures of the enclosed drawings, wherein:

Figure 1 is a cross sectional vertical view of the connector hinge according to the present invention;

Figure 2 is a front view of the male member of the hinge according to the present invention;

Figure 3 is a front view of a slot provided in the body for realizing the connection of said male member;

Figure 4 is a top view of a male member-body coupling; and

Figure 5 is a perspective view of the female member of the connector hinge according to the present invention.

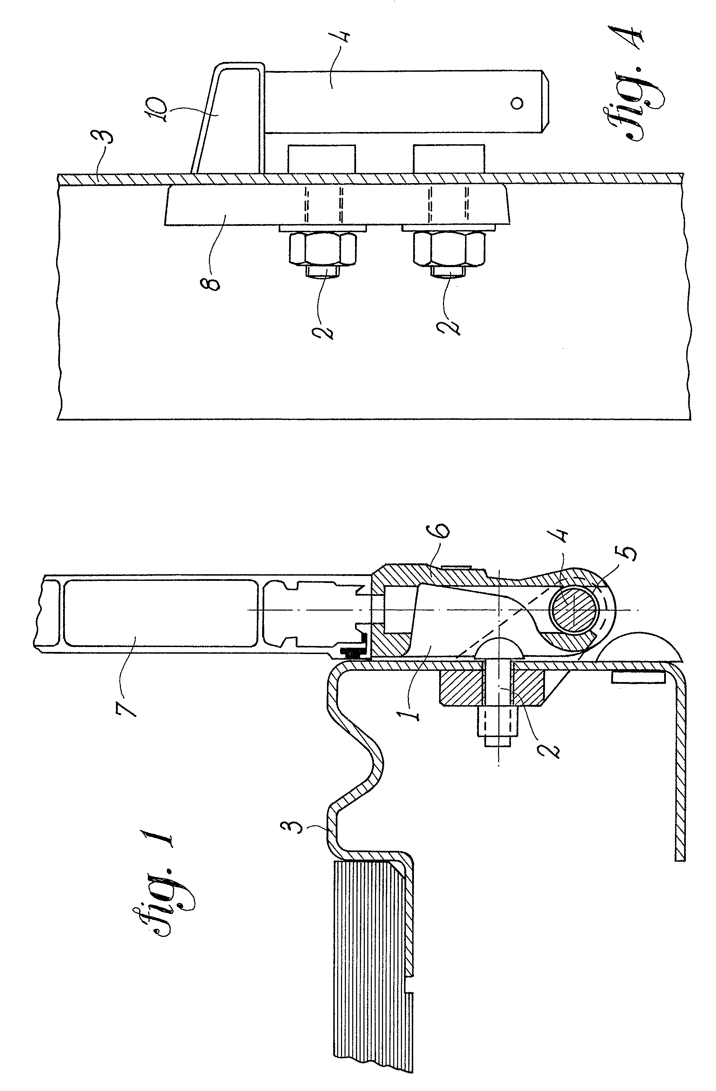

With reference now more particularly to Figure 1, a connector hinge according to the present invention can be observed as assembled.

The male member 1 is connected through bolts 2 to the body 3 of the vehicle and it has a pin 4 that is inserted into the hole 5 of the female member 6.

This latter member 6 which is thus hinged to the male member 1 is integral at the top part with the lower part of the side board 7.

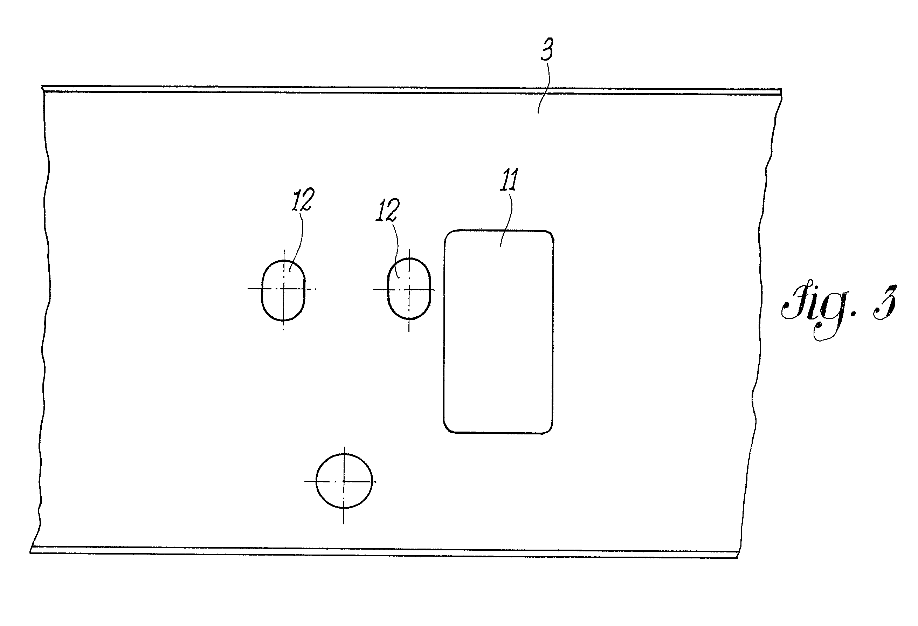

Observing now Figures 2-4, a more accurate representation can be obtained of the way by which said male member 1 is fastened to the body 3.

Said male member 1 (Figure 2) has a back plate 8 having two holes 9. An overhanging member 10 protrudes perpendicularly from said plate 8, said member 10 performing the function of supporting the pin 4 arranged in a direction parallel to said plate 8, so that it does not interfere with said holes 9.

The body 3 (Figure 3) has a slot 11 that allows said plate 8 of the male member 1 to be inserted, and two corresponding holes 12, when the plate 8 is inserted into the slot 11, said holes 12 corresponding to the holes 9.

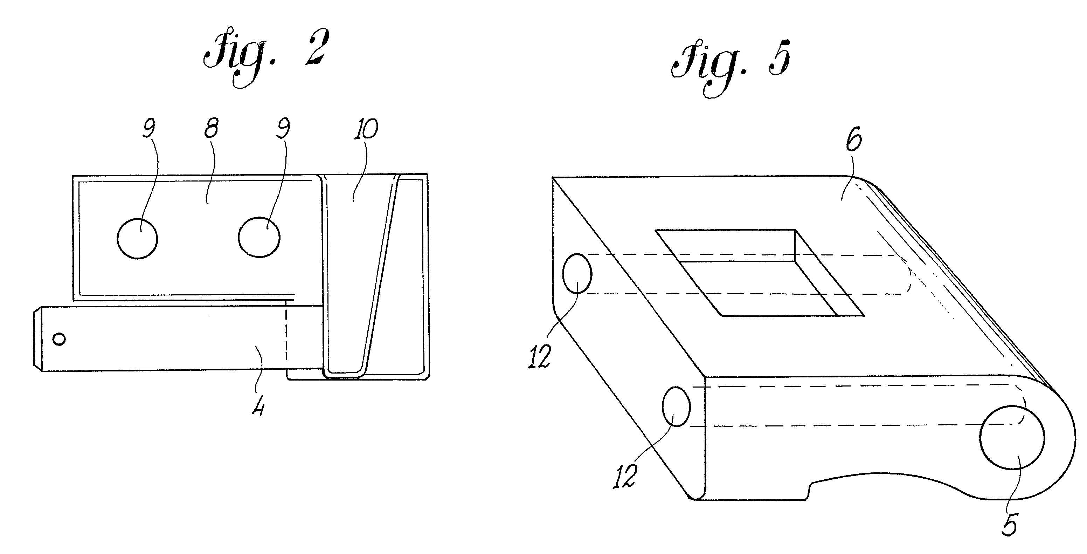

The coupling is locked by two bolts 2 so that a structure as shown in Figure 4 is obtained.

The female member 6 (see in particular Figure 5) has a through hole 5 that engages rotatably with the pin 4 of said male member 1.

Again on said female member 6 two holes are provided in the upper side of the same, for fastening the side board 7 of the vehicle.

As can be observed in the enclosed drawings, the assembling of the various hinges to the vehicle is extremely easy and it consists in very rapid operations.

In addition, observing in particular Figure 1, it can be remarked that once the load is sealed so that it is no longer possible to open the side boards 7 in a normal way, the various hinges arranged along the body do not allow absolutely any alterations of the load by exerting an action from the lower part between the body and side boards 7.

Indeed, it is impossible to disconnect the male member 1 from the female member 2, and in addition, even though one succeeds in unscrewing the nut of the bolts 2, the par ticular way by which the male member 1 is connected to the slot 11 of the body 2 does not allow the same to be removed before lowering the side board 7 and before disconnecting the female member 6.

As this last operation is made impossible to be carried out because of the presence of the customs seals, unless the seals themselves are broken, it is evident that the connector hinge according to the present invention does not allow any tampering with the load without leaving evident traces of such action.

The present invention has been disclosed just for illustrative and not for limitative purposes according to some preferred embodiments of the same, but it is to be understood that modifications and/or changes can be introduced in the invention by those who are skilled in the art without departing from the spirit and scope of the invention for which a priority right is claimed.

**Claims**

1. A connector hinge of the side boards to the body of T.I.R. vehicles, said hinge being characterized in that it comprises a male member consisting of a plate that couples with a slot obtained in the lateral surface of the body, and of a pin which is parallel to said plate and is coupled to the same by means of a connection member; and a female member provided at the lower portion with a hole for realizing the rotatable coupling with said pin of said male member and, at the upper part, with means for realizing the fixed coupling with the lower part of the side board of the body; the connection between said slot and said male member being realized so that such member cannot be removed if the female member is connected to the male member.

2. A connector hinge according to claim 1, characterized in that the male member is fastened to the lateral surface of the body by means of bolts passing through corresponding holes provided in said lateral surface and in the plate of said male member, the pin of the latter being arranged so that it does not interfere with said bolts.

3. A connector hinge according to claim 1, characterized in that the connection between said female member and said side board is obtained by means of two holes provided in the upper surface of said female member, into which holes the corresponding locking members are inserted.

4. A connector hinge according to claim 1, characterized in that a safety member is provided at the end of said male member protruding out of the hole in said female member.

fig. 4

fig. 1

fig. 3

Fig. 5

Fig. 2

European Patent
Office

# EUROPEAN SEARCH REPORT

Application Number

EP 88 83 0472

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 321 558 (ALUMINIUM PRESS V. WALZWERK MUNCHENSTEIN) * Column 6, lines 54-68; column 7, lines 1-29; figures 3-8 * --- | 1,2,3 | B 62 D 33/02 E 05 D 5/04 |
| A | GB-A-2 009 058 (SWISS ALUMINIUM) * Figures 2,6 * --- | 1,2 | |
| A | DE-A-1 935 444 (HEINZE) * Page 6, paragraph 3; figure 13 * --- | 1 | |
| A | LU-A- 64 879 (VEREINIGTE ALUMINIUM WERKE AG) * Figures 1,2 * ----- | 1 | |
| | | | TECHNICAL FIELDS SEARCHED (Int. Cl.4) |
| | | | B 62 D E 05 D |

The present search report has been drawn up for all claims

| Place of search | Date of completion of the search | Examiner |
|---|---|---|
| THE HAGUE | 24-01-1989 | NEYS B.G. |

EPO FORM 1503 03.82 (P0401)